# EUROPÄISCHE PATENTANMELDUNG

(11) **EP 4 321 385 A1**
(43) Veröffentlichungstag der Anmeldung: **14.02.2024**
(21) Anmeldenummer: 23189880.0
(22) Anmeldetag: 04.08.2023
(51) Int. Cl.: B60R 11/00, B60R 11/02, B60R 11/04

(54) **FREIZEITFAHRZEUG UND HALTEEINRICHTUNG FÜR BAUTEILE EINES FREIZEITFAHRZEUGS**

(30) Priorität: 04.08.2022 DE 102022119679
(71) Anmelder: Bürstner GmbH & CO. KG, 77694 Kehl (DE)
(72) Erfinder: Almeida, Gilberto, 76437 Rastatt (DE); Niedick, Tim, 77652 Offenburg (DE)
(74) Vertreter: Müller Schupfner & Partner Patent- und Rechtsanwaltspartnerschaft mbB

(57) **Zusammenfassung**

Halteeinrichtung (1) für Bauteil (2), insbesondere Anbauteile, eines Freizeitfahrzeugs, insbesondere eines Wohnmobils oder eines Wohnwagens, wobei ein Lagerelement (3), ein an dem Lagerelement (3) mit zwei Translationsfreiheitsgraden schwimmend gelagertes Aufnahmeelement (4) und ein Verbindungselement (5) vorgesehen sind. Ferner weist das Verbindungselement (5) einen Kopf (6) auf, an dem das Verbindungselement (5) an dem Aufnahmeelement (4) gehalten ist. Außerdem ist ein Freizeitfahrzeug, insbesondere ein Wohnmobil oder ein Wohnwagen, mit einem Bauteil (2) angegeben, das mittels solch einer Halteeinrichtung (1) gehalten, insbesondere befestigt, ist.

## Beschreibung

Die Erfindung betrifft ein Freizeitfahrzeug, insbesondere ein Wohnmobil oder einen Wohnwagen, und eine Halteeinrichtung für Bauteile eines Freizeitfahrzeugs.

Ein Freizeitfahrzeug, wie ein Wohnmobil, kann beispielsweise auf der Basis eines Serienfahrzeugs hergestellt werden. Gegebenenfalls ist es dann erforderlich, gewisse Bauteile, insbesondere Anbauteile, wie Heckleuchten, zu befestigen.

Der vorliegenden Erfindung liegt die Aufgabe zugrunde, eine Halteeinrichtung für Bauteile eines Freizeitfahrzeugs, insbesondere eines Wohnmobils oder eines Wohnwagens, und ein Freizeitfahrzeug mit solch einer Halteeinrichtung anzugeben, die eine vorteilhafte Ausgestaltung und Funktionsweise ermöglichen, wobei vorzugsweise erhöhte Einbautoleranzen ermöglicht sind.

Die Aufgabe wird durch eine Halteeinrichtung mit den Merkmalen des unabhängigen Patentanspruchs 1 und durch ein Freizeitfahrzeug mit den Merkmalen des Patentanspruchs 8 gelöst. Vorteilhafte Weiterbildungen der Erfindung sind in den Unteransprüchen angegeben.

Die Aufgabe wird durch eine Halteeinrichtung für Bauteile, insbesondere Anbauteile, eines Freizeitfahrzeugs, insbesondere eines Wohnmobils oder eines Wohnwagens, gelöst, wobei ein Lagerelement, ein an dem Lagerelement mit zwei Translationsfreiheitsgraden schwimmend gelagertes Aufnahmeelement und ein Verbindungselement vorgesehen sind und wobei das Verbindungselement einen Kopf aufweist, an dem das Verbindungselement an dem Aufnahmeelement gehalten ist.

Ferner wird die Aufgabe durch ein Freizeitfahrzeug, insbesondere ein Wohnmobil oder einen Wohnwagen, mit einem Bauteil, das mittels zumindest einer solchen Halteeinrichtung gehalten, insbesondere befestigt, ist, gelöst.

In vorteilhafter Weise ist das Verbindungselement an seinem Kopf in zumindest einer Richtung schwenkbar an dem Aufnahmeelement gehalten. Hierdurch können Toleranzen ausgeglichen werden, die in Bezug auf eine Ausrichtung entlang einer Achse bestehen.

In vorteilhafter Weise ist das Verbindungselement an seinem Kopf in allen Richtungen schwenkbar an dem Aufnahmeelement gehalten. Dadurch können in allen Schwenkrichtungen Toleranzen bezüglich einer axialen Ausrichtung ausgeglichen werden. Ferner ist es vorteilhaft, dass das Aufnahmeelement eine kegelförmige Innenseite aufweist, die ein Schwenken des Verbindungselements an seinem Kopf relativ zu dem Aufnahmeelement begrenzt. Hierdurch kann eine hohe mechanische Stabilität gewährleistet werden. Dies ist auch bei der Montage vorteilhaft.

Vorteilhaft ist es, dass das Aufnahmeelement eine Gleitscheibe aufweist, dass das Lagerelement einen Gleitraum begrenzt und dass die Gleitscheibe in dem Gleitraum zumindest an einer den Gleitraum begrenzenden Innenseite gehalten ist. Dadurch ist in vorteilhafter Weise eine schwimmende Lagerung ermöglicht. Hierbei ist es ferner vorteilhaft, dass die Gleitscheibe zumindest näherungsweise zylinderförmig ausgestaltet ist. Hierdurch kann eine hohe mechanische Stabilität erzielt werden, wobei sich außerdem ein kompakter Aufbau ergibt.

In vorteilhafter Weise ist das Verbindungselement mit einem von dem Kopf abgewandten Befestigungsabschnitt ausgeführt, wobei an dem Befestigungsabschnitt vorzugsweise ein Gewinde vorgesehen ist. Dadurch kann das Verbindungselement in vorteilhafter Weise durch Anschrauben befestigt werden. Das Verbindungselement ist hierbei vorzugsweise bezüglich seiner Längsachse rotationssymmetrisch oder zumindest im Wesentlichen rotationssymmetrisch ausgestaltet. Insbesondere kann der Kopf bezüglich der Längsachse des Verbindungselements rotationssymmetrisch ausgestaltet sein.

Vorteilhaft ist es auch, dass das Lagerelement zumindest stoffschlüssig mit dem Bauteil verbunden ist. Hierbei kann das Lagerelement in vorteilhafter Weise mit dem Bauteil durch Kleben verbunden sein. Ferner ist es auch möglich, dass das Lagerelement mit dem Bauteil durch Schweißen verbunden ist.

Speziell das Aufnahmeelement kann zumindest teilweise als Buchse ausgestaltet sein. Das Aufnahmeelement ist hierbei zumindest während der Montage beweglich. Durch das bewegliche Aufnahmeelement kann beim Anbringen eines Anbauteils, zum Beispiel einer Radlaufblende, mit fertigungsbedingten Toleranzen das Verbindungselement in das vorzugsweise buchsenförmige Aufnahmeelement leicht eingefügt und verrastet werden. Hierbei kann zwischen dem Verbindungselement und dem Aufnahmeelement eine Rotationsfreiheit um die Längsachse des Verbindungselements um 360° bestehen.

Das Lagerelement mit dem daran gelagerten Aufnahmeelement kann zum Beispiel an einer Radlaufblende angeklebt oder mit dieser verschweißt werden. Das Verbindungselement kann beispielsweise über ein Schraubgewinde an der Wand eines Wohnmobils eingeschraubt sein. Durch das schwimmend gelagerte Aufnahmeelement können dann beim Fügen der Radlaufblende größere Bauteiltoleranzen überwunden werden.

Somit kann im Unterschied zu einem Befestigungskonzept, welches einen Toleranzausgleich nur in einer Richtung zulässt, auch ein Abfangen von Toleranzen in mehreren Richtungen, insbesondere allen Richtungen, sowie eine Relativrotation um 360° ermöglicht werden. Speziell kann hierbei eine werkzeugfreie Montage von zwei Bauteilen beliebiger Art mit Toleranzausgleich ermöglicht werden. Die Bauteile können hierbei so vorbereitet werden, dass einerseits das Lagerelement mit dem Aufnahmeelement und andererseits das Verbindungselement montiert sind. Dadurch kann insbesondere ein Anbauteil in einfacher Weise bei der Herstellung an das Freizeitfahrzeug montiert werden.

Weitere Vorteile und Einzelheiten der Erfindung werden anhand der in den schematischen Figuren dargestellten Ausführungsbeispielen näher erläutert. Hierbei zeigen:
- Fig. 1: eine Halteeinrichtung für Bauteile eines Freizeitfahrzeugs in einer schematischen, räumlichen Darstellung entsprechend einem Ausführungsbeispiel, wobei das Verbindungselement, das Aufnahmeelement und das Lagerelement gezeigt sind;
- Fig. 2: die in Fig. 1 gezeigte Halteeinrichtung, wobei eine Position einer Gleitscheibe des Aufnahmeelements veranschaulicht ist;
- Fig. 3: die in Fig. 1 gezeigte Halteeinrichtung in einer schematischen Schnittdarstellung, wobei eine Bewegbarkeit des Aufnahmeelements relativ zu dem Lagerelement veranschaulicht ist; und
- Fig. 4: die in Fig. 1 gezeigte Halteeinrichtung entsprechend dem Ausführungsbeispiel in einer Draufsicht.

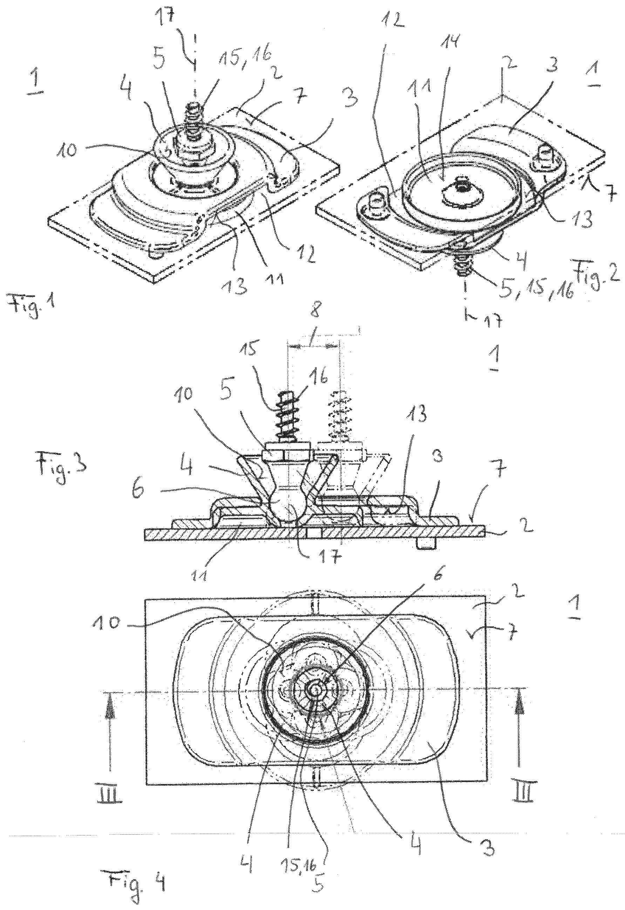

Fig. 1 bis 4 zeigen eine Halteeinrichtung 1 für Bauteile 2 eines Freizeitfahrzeugs entsprechend einem Ausführungsbeispiel. Hierbei zeigt Fig.1 eine auszugsweise, schematische, räumliche Darstellung der Halteeinrichtung 1, wobei das Bauteil 2 stark vereinfacht und auszugsweise dargestellt ist. Fig. 2 zeigt eine schematische, räumliche Darstellung des Bauteils 2 mit der Halteeinrichtung 1 zur Veranschaulichung der Befestigung. Fig. 3 zeigt eine auszugsweise, schematische Schnittdarstellung der Halteeinrichtung 1 mit dem Bauteil 2, wobei ein Schnitt entlang der in Fig. 4 mit III bezeichneten Schnittlinie gezeigt ist. Fig. 4 zeigt eine Draufsicht auf die in Fig. 1 gezeigte Halteeinrichtung 1 mit dem Bauteil 2 in einer schematischen Darstellung. In Fig. 3 und 4 sind hierbei mögliche Positionsänderungen zusätzlich eingezeichnet, um einen Verstellbereich zu veranschaulichen.

Die Halteeinrichtung 1 eignet sich besonders für Bauteile 2, die als Anbauteile 2 am Freizeitfahrzeug befestigt werden. Das Freizeitfahrzeug kann insbesondere als Wohnmobil oder Wohnwagen ausgestaltet sein.

Die Halteeinrichtung 1 weist ein Lagerelement 3 auf, das mit dem Bauteil 2 verbunden ist. Ferner weist die Halteeinrichtung 1 ein Aufnahmeelement 4 auf, das an dem Lagerelement 3 schwimmend gelagert ist. Die schwimmende Lagerung ist hierbei mit zwei Translationsfreiheitsgraden realisiert. Außerdem ist es Verbindungselement 5 vorgesehen, das einen Kopf 6 aufweist. Bei der Montage wird das Verbindungselement 5 mit seinem Kopf 6 in das Aufnahmeelement 4 eingesetzt, so dass eine formschlüssige Verbindung realisiert ist.

Durch die zwei Translationsfreiheitsgrade kann dann insbesondere eine Verstellung des Aufnahmeelements 4 parallel zu einer Oberseite 7 des Bauteils 2 erfolgen. Dies ermöglicht einen Toleranzausgleich. Beispielsweise kann, wie in Fig. 3 dargestellt ist, ein Verstellbereich 8 realisiert werden, um das Verbindungselement 5 entsprechend den Bauteiltoleranzen an unterschiedlichen Stellen in das Aufnahmeelement 4 zu fügen.

Zusätzlich ist das Verbindungselement 5 an seinem Kopf 6 so in dem Aufnahmeelement 4 befestigt, dass ein Schwenken ermöglicht ist. Hierbei ist das Verbindungselement 5 an seinem Kopf 6 vorzugsweise in allen Richtungen schwenkbar an dem Aufnahmeelement 4 gehalten, wie es in Fig. 4 veranschaulicht ist.

Ferner kann bei der Montage ein Finden der Verbindung zwischen dem Verbindungselement 5 und dem Aufnahmeelement 4 ermöglicht werden. Hierfür weist das Aufnahmeelement 4 eine kegelförmige Innenseite 10 auf, so dass sich das Verbindungselement 5 und das Aufnahmeelement 4 relativ zueinander positionieren können. Die kegelförmige Innenseite 10 des Aufnahmeelements 4 kann außerdem ein Schwenken des Verbindungselements 5 an seinem Kopf 6 relativ zu dem Aufnahmeelement 4 begrenzen. Hierdurch können Fehlmontagen verhindert werden.

Das Aufnahmeelement 4 weist zur Realisierung der Verbindung eine Gleitscheibe 11 auf. Hierbei begrenzt das Lagerelement 3, wenn es an dem Bauteil 2 befestigt ist, einen Gleitraum 12. Die Gleitscheibe 11 ist dann in dem Gleitraum 12 angeordnet. Die mechanische Befestigung beziehungsweise das Halten wird unter anderem dadurch erzielt, dass die Gleitscheibe 11 in dem Gleitraum 12 an der den Gleitraum 12 begrenzenden Innenseite 13 des Lagerelements 3 gehalten ist.

Je nach Ausgestaltung kann die Gleitscheibe 11 zumindest näherungsweise zylinderförmig ausgestaltet sein. Dies ermöglicht zum einen eine kompakte Ausgestaltung. Zum anderen wird eine vorteilhafte Beweglichkeit erzielt. Insbesondere kann hierdurch eine Rotation des Aufnahmeelements 4 um 360° bezüglich einer Achse 17 ermöglicht werden. In diesem Ausführungsbeispiel weist die zylinderförmige Gleitscheibe 11 eine Ausnehmung 14 auf. Die Gleitscheibe 11 kann dadurch beispielsweise aus einem Blech ausgeformt werden.

Zur Befestigung mit einem weiteren Bauteil (nicht dargestellt) beziehungsweise dem Fahrzeug weist das Verbindungselement 5 einen Befestigungsabschnitt 15 auf. Der Befestigungsabschnitt 15 ist hierbei von dem Kopf 6 abgewandt. Der Befestigungsabschnitt 15 kann als Bolzen, insbesondere Schraubbolzen, ausgestaltet sein. An dem Befestigungsabschnitt 15 ist somit vorzugsweise ein Gewinde 16 vorgesehen, wobei aber auch andere Ausgestaltungen denkbar sind. Beispielsweise kann auch ein Einkleben oder ein Anschweißen erfolgen.

Entsprechend kann das Lagerelement 3 auf geeignete Weise mit dem Bauteil 2 verbunden sein. Vorzugsweise ist das Lagerelement 3 stoffschlüssig mit dem Bauteil 2 verbunden. Zur stoffschlüssigen Verbindung eignet sich insbesondere Kleben und/oder Schweißen.

Die Erfindung ist nicht auf die beschriebenen Ausführungsbeispiele beschränkt.

## Patentansprüche

1. Halteeinrichtung (1) für Bauteile (2), insbesondere Anbauteile, eines Freizeitfahrzeugs, insbesondere eines Wohnmobils oder eines Wohnwagens,
**dadurch gekennzeichnet,**
**dass** ein Lagerelement (3), ein an dem Lagerelement (3) mit zwei Translationsfreiheitsgraden schwimmend gelagertes Aufnahmeelement (4) und ein Verbindungselement (5) vorgesehen sind und dass das Verbindungselement (5) einen Kopf (6) aufweist, an dem das Verbindungselement (5) an dem Aufnahmeelement (4) gehalten ist.

2. Halteeinrichtung nach Anspruch 1,
**dadurch gekennzeichnet,**
**dass** das Verbindungselement (5) an seinem Kopf (6) in zumindest einer Richtung schwenkbar an dem Aufnahmeelement (4) gehalten ist.

3. Halteeinrichtung nach Anspruch 1 oder 2,
**dadurch gekennzeichnet,**
**dass** das Verbindungselement (5) an seinem Kopf (6) in allen Richtungen schwenkbar an dem Aufnahmeelement (4) gehalten ist.

4. Halteeinrichtung nach Anspruch 2 oder 3,
**dadurch gekennzeichnet,**
**dass** das Aufnahmeelement (4) eine kegelförmige Innenseite (10) aufweist, die ein Schwenken des Verbindungselements (5) an seinem Kopf (6) relativ zu dem Aufnahmeelement (4) begrenzt.

5. Halteeinrichtung nach einem der Ansprüche 1 bis 4,
**dadurch gekennzeichnet,**
**dass** das Aufnahmeelement (4) eine Gleitscheibe (11) aufweist, dass das Lagerelement (3) einen Gleitraum (12) begrenzt und dass die Gleitscheibe (11) in dem Gleitraum (12) zumindest an einer dem Gleitraum (12) begrenzenden Innenseite (13) gehalten ist.

6. Halteeinrichtung nach Anspruch 5,
**dadurch gekennzeichnet,**
**dass** die Gleitscheibe (11) zumindest näherungsweise zylinderförmig ausgestaltet ist.

7. Halteeinrichtung nach einem der Ansprüche 1 bis 6,
**dadurch gekennzeichnet,**
**dass** das Verbindungselement (5) einen von dem Kopf (6) abgewandten Befestigungsabschnitt (15) aufweist, an dem vorzugsweise ein Gewinde (16) vorgesehen ist.

8. Freizeitfahrzeug, insbesondere Wohnmobil oder Wohnwagen, mit einem Bauteil (2), das mittels zumindest einer Halteeinrichtung (1) nach einem der Ansprüche 1 bis 7 gehalten, insbesondere befestigt, ist.

9. Freizeitfahrzeug nach Anspruch 8,
**dadurch gekennzeichnet,**
**dass** das Lagerelement (3) zumindest stoffschlüssig mit dem Bauteil (2) verbunden ist.

10. Halteeinrichtung nach Anspruch 8 oder 9,
**dadurch gekennzeichnet,**
**dass** das Lagerelement (3) mit dem Bauteil (2) durch Kleben und/oder Schweißen verbunden ist.
